# EUROPEAN PATENT APPLICATION

(11) **EP 3 086 453 A1**
(43) Date of publication of application: **26.10.2016**
(21) Application number: 16162743.5
(22) Date of filing: 30.03.2016
(51) Int. Cl.: H02M 1/32, H02M 7/5387, H02M 7/5395

(54) **CONVERTER WITH TEMPERATURE BALANCING BY MEANS OF COMMON-MODE DC-OFFSETS**

(30) Priority: 23.04.2015 GB 201506183
(71) Applicant: Rolls-Royce plc, London SW1E 6AT (GB)
(72) Inventor: Lee, Meng Yeong, Derby, Derbyshire DE24 8BJ (GB); Gajanayake, Chandana Jayampathi, Derby, Derbyshire DE24 8BJ (GB); Jayasinghe, Shantha Dharmasiri Gamini, Derby, Derbyshire DE24 8BJ (GB); Nadarajan, Sivakumar, Derby, Derbyshire DE24 8BJ (GB); Gupta, Amit Kumar, Derby, Derbyshire DE24 8BJ (GB)
(74) Representative: Rolls-Royce plc

(57) **Abstract**

A method of controlling an inverter, in which the inverter includes a single-phase inverter arrangement comprising a complementary pair of power switches, comprises the steps of:
controlling the complementary pair of power switches with a modulating signal to output an AC signal;
judging which of the power switches in the complementary pair of power switches is at a higher temperature;
determining the magnitude and sign of a DC offset signal to apply to the modulating signal to reduce the total current in the power switch judged to be at the higher temperature; and
applying the DC offset signal to the modulating signal.

## Description

### Field of the Disclosure

The present disclosure principally, but not exclusively, relates to a method for uniform distribution of thermal stress amongst devices in a power converter, such as a DC to AC converter.

### Background of the Disclosure

Power electronics is a technology that facilitates electrical energy conversion between source and load based on the combined functionality of energy systems, electronics and control. The use of power electronics has been widely seen in various applications, such as aerospace, military, automotive, computing etc., for proper and energy efficient operation.

In power electronics systems, the conversion process begins when the controller, which is a low-power digital or analog electronic circuit, operates the power converter/switches according to a modulation strategy.

Power switches, such as insulated-gate bipolar transistors (IGBT) or metal-oxide-semiconductor field-effect transistors (MOSFET), are one of the key components in power electronic system and its robustness and reliability determine the performance and availability of the power system.

Over the years, there has been continuous improvement on the design of power switches in order to make them more robust and reliable for industrial applications.

However, thermal management of power switches has been a challenge, especially in high ambient operating temperature environment. Due to the non-ideal characteristics of power switches (for example internal resistance and parasitic capacitances and inductances for example), power losses are seen (typically, referred to as conduction and switching losses) during operation of the power switches.

Losses in a power switch cause the junction temperature to increase. As the power switch is heated above its rated operating junction temperature, its reliability will typically be affected as every 10 degree Celsius increment above rated temperature will reduce the lifetime of the power switch by half.

In order to reduce power losses in power switches, various methods have been proposed. These methods can be classified into hardware-based and control-based solutions. Hardware-based solutions are generally based on the addition of resonant tanks into the system to enable zero voltage or zero current switching of power switches, leading to reduced switching losses. However, the use of resonant tanks increases the circulating current in the system, leading to the increase of conduction losses that may offset the reduction in switching losses. In addition, the inclusion of resonant tanks increases the complexity in system analysis.

Alternatively, the control-based solutions offer a simple approach to reducing losses in the power switches via a modulation strategy. Without affecting the outputs of the system, the control-based solutions reduce the amount of switching of the power switches by modifying the switching patterns. This is achieved by adding appropriate harmonics into the modulating signals.

The main reason for the limited achievable loss reduction for most conventional hardware-based and control-based solutions is because switching loss only contributes a limited portion of total losses under conventional switching frequency operation of power electronics systems. Unless very high switching frequency operation is implemented, the conduction losses tend to be the major losses in power switches. Therefore, the effectiveness of hardware-based and control-based techniques in reducing thermal stress of power switch is limited for conventional switching frequency operation of power electronics system.

The three-phase DC-AC converter (also referred as an inverter) has been one of the power electronic systems which is most widely used in industrial applications, such as adjustable speed drive, uninterrupted power supplies, etc. This converter typically consists of six power switches, which are operated according to sequences specified by the selected modulation strategy. As every power switch is different in terms of internal resistance, parasitic capacitance and inductance, one particular power switch may be heated at a faster rate than the others, causing the particular power switch to experience higher thermal stress than the others. The failure of even one power switch (e.g. due to thermal stress) will inevitably affect the reliability and availability of the overall system. This shows the importance of ensuring an even distribution of thermal stresses of the power devices in the power converter system in order to improve the reliability of the system. Nevertheless, conventional hardware-based and control-based techniques are not able to ensure even distribution of thermal stress of power switches across power converter system.

### Summary of the Disclosure

Thus, the present disclosure proposes a method as set forth in Claim 1.

Accordingly, a control technique is provided that can improve the reliability and availability of, for example, power switches in a power electronics system without any modification of the hardware design. The thermal stresses of power switches in a power electronic system can be reduced and evenly distributed. This can significantly reduce the possibility of device failure due to thermal stress and improves the reliability of the system.

### Brief Description of the Drawings

Embodiments of the disclosure will now be described by way of example with reference to the accompanying drawings in which:
Figure 1 shows a three phase inverter to which the present disclosure is applicable;
Figure 2 (A) shows an example of the respective voltage waveforms used in a typical sinusoidal pulse width modulation technique,
Figure 2(B) shows the resultant terminal voltage for inverter leg A shown in Figure 1,
Figure 2(C) shows the resultant terminal voltage for inverter leg B shown in Figure 2,
Figure 2(D) shows the fundamentally sinusoidal voltage obtained between the respective terminals of legs A and B;
Figure 3(A) shows a simplified version of Figure 2(A), showing the triangular carrier wave and (i) a modulating signal V_{A}, and (ii) a modulating signal V_{A} with a negative DC offset applied,
Figure 3(B) shows the resultant switching signal for (i) the modulating signal V_{A},
Figure 3(C) shows the resultant switching signal for (ii) the modulating signal V_{A} with a negative DC offset applied;
Figure 4 shows the junction temperatures of power switches S1 and S4 for the modulating signal V_{A} with a negative DC offset applied;
Figure 5 shows a flowchart exemplifying an embodiment of the present disclosure;
Figure 6 shows the effects of adding the third order harmonics into the modulating signals;
Figure 7 shows a respective "cell" for each physical domain of an IGBT switch structure, consisting of thermal resistance and capacitance;
Figure 8 shows a sample plot of junction to case thermal impedance variation with respect to changes in rectangular pulse duration for the arrangement of Figure 7;
Figure 9 shows a representation of a thermal impedance model for the arrangement of Figure 7;
Figure 10 shows a typical switching loss vs current characteristic for the arrangement of Figure 7;
Figure 11 shows a representation of an energy loss model for the arrangement of Figure 7;
Figure 12 shows a typical variation in voltage-current relationship with device junction temperature for the arrangement of Figure 7;
Figure 13 shows a representation of a voltage-current relationship model for the arrangement of Figure 7;
Figure 14 shows a schematic power loss model for the arrangement of Figure 7;
Figure 15 shows typical plots of measured and estimated values of junction temperature for the arrangement of Figure 7;
Figure 16 shows measured and experimental values of junction temperature for the arrangement of Figure 7; and
Figure 17 shows a sample plot of measured and estimated values of junction temperature for the arrangement of Figure 7.

### Detailed Description and Further Optional Features of the Disclosure

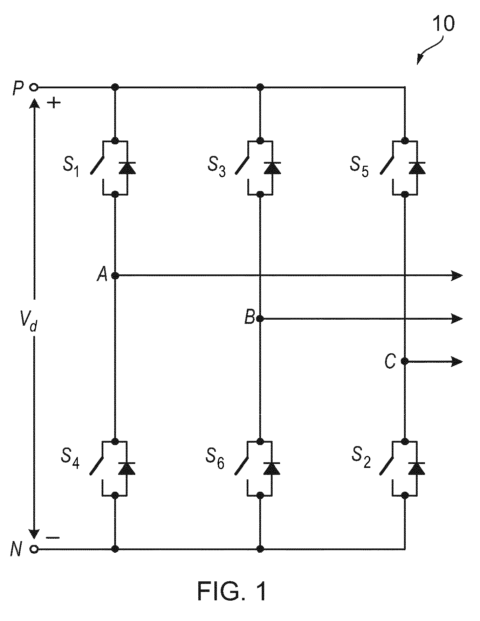

The present disclosure is applicable to three-phase power converter systems that use pulse-width modulation strategy to control the switching of power switches, for example. An example of a (generalised) suitable three-phase power converter system is shown in Figure 1. The three-phase converter 10, also referred to as an inverter, shown in Figure 1 is used to explain the concept of this disclosure.

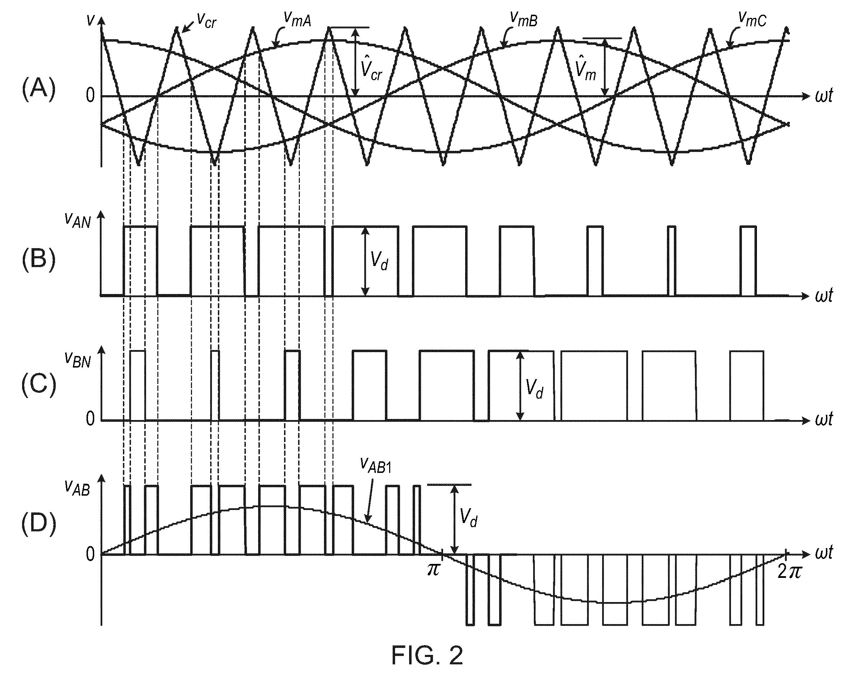

In general, to generate AC output waveforms from the DC supply V_{d} in Figure1, power switches S₁-S₆ of the inverter are turned on and off according to a sequence specified by a modulation strategy. For example, a sinusoidal pulse-width modulation strategy can be applied, which is a strategy known to the skilled person. An example is shown in the uppermost plot shown in Figure 2, where V_{mA}, V_{mB}, V_{mc} are the three-phase sinusoidal modulating waves and Vcr is a triangular carrier wave. The gating signals for a conventional two-level inverter, e.g. as shown in Figure 1, operated using PWM can be derived as follows. The operation of switches S1 to S6 is determined based on a comparison of the modulating waves (V_{mA}, V_{mB}, V_{mc}) with the carrier wave (V_{cr}). When e.g. V_{mA} is greater than or equal to V_{cr}, the upper switch S1 in inverter leg A is turned on. The lower switch S4 operates in a complementary manner and thus is switched off. The resultant inverter terminal voltage V_{AN}, which is the voltage at the phase A terminal with respect to the negative DC-link bus "N", is equal to the DC voltage V_{d}. When V_{mA} is less than V_{cr}, S4 is on and S1 is off, leading to V_{AN}=0. The same methodology is applied to generate the inverter terminal voltages V_{BN} and V_{CN}.

The output waveforms generated by the inverter are composed of discrete values with fast transition, as shown in the lower plots of Figure 2. Even though the output waveform is not truly sinusoidal, the fundamental component of the output waveform (for example, V_{AB}) behaves as a sinusoid.

Conventionally, it is known that for a three phase inverter such as this, third order harmonics can be added to the modulating signals to achieve better DC-link voltage utilization; typically about 28% more utilization. In particular, due to the three-phase operation of the inverter, the third order harmonics cancel each other out in each phase, enabling sinusoidal output waveforms.

This concept is applicable for the addition of DC injection in the modulating signals, which forms the foundation of this disclosure. In other words, the effects of applying harmonics into the modulating signals can be cancelled within the three phase inverter operation. Therefore, DC injection can also be added to the modulating signal with no adverse effect on the operation of the converter.

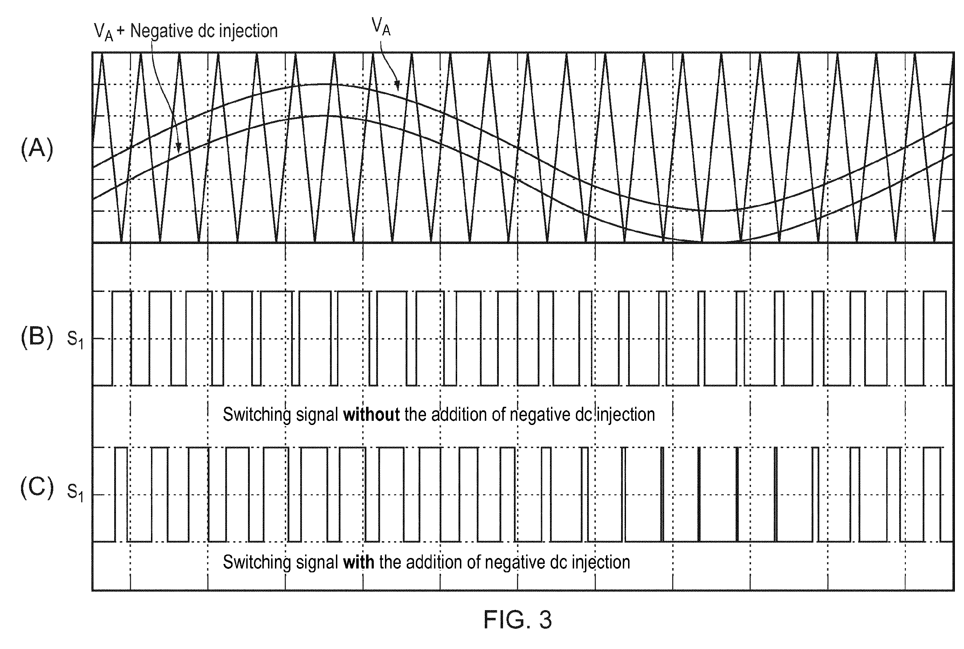

Advantages of the present disclosure will be appreciated with reference to Figure 3, which shows the modulating signal (Figure 3A) and corresponding switching signals (Figures 3B and 3C) for power switch S₁ in Figure 1 when controlled according to an aspect of the present disclosure. Figure 3A also shows, overlayed on the modulating signal plot, plots for "V_{A} + Negative DC Injection" and "V_{A}".

As will be appreciated with reference to Figure 3, by adding an appropriate DC injection to the modulating signal, the conduction time of the power switches (for example, switch S₁ for which Figure 3 is representative) can be altered. In particular, for this example, a negative DC voltage was injected to the modulating signal and the conduction times of S₁ were taken.

Figure 3B represents the switching signal without the addition of the negative DC injection. Figure 3C represents the switching signal with the addition of the negative DC injection. As will be appreciated, the switching signal can be thought of as toggling between 0 and 1 in Figures 3B and 3C, where 1 represents a conducting state of the power switch. In essence, it can be seen (even by eye) that the conduction time (i.e. the length of time spent at value 1, and thus in a conducting state) of the power switch S₁ is less in Figure 3C than in Figure 3B. In other words, the conduction time of power switch S₁ is shorter when the DC injection is added to the modulating signal compared with the situation where the DC injection is not added to the modulating signal. Thus, the switch S₁ will be heated less when the DC injection is added to the modulating signal than when it is not added.

For a three-phase inverter such as that shown in Figure 1, each phase leg consists of two power switches (forming a complementary pair, for example). For example, the phase leg switch pairs in Figure 1 are: S₁ and S₄; S₃ and S₆; and S₅ and S₂. The switching states for these two switches are always opposite.

Therefore, by reducing the conduction time of one power switch (in this case S₁), the conduction time for the complementary switch of the pair (for example S₄) will be longer.

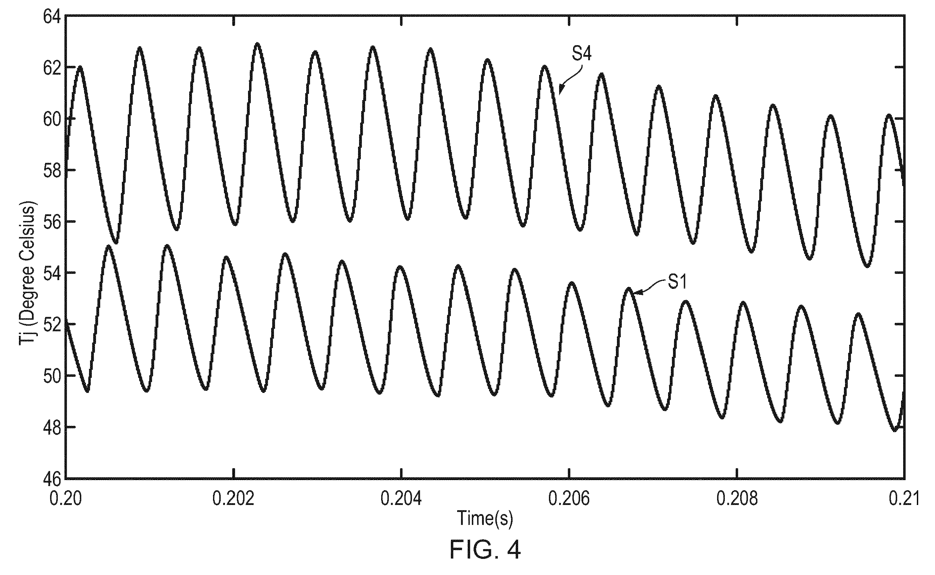

This indirectly transfers the thermal stress from one switch of the pair to another. The effectiveness of this method in transferring the thermal stress is shown in Figure 4. By adding sufficient DC injection to the modulating signal, the average junction temperature of S₁ is almost 6 - 8 degree Celsius lower than that of S₄. As a result, by manipulating the addition of DC injection in the modulating signals, the thermal stresses of the power devices in the three-phase inverter can be distributed between the upper and lower switches at will.

Nevertheless, the present inventors have realised that the magnitude of applicable DC injection is limited by the modulation index so as to prevent the inverter operating in the so-called overmodulation region.

If the operating modulation index is high, the effects of DC injection are limited and, hence, achievable loss reduction and thermal stress distribution will be inadequate.

Therefore, appropriate third order harmonics (3rd, 6th, 9th etc.) can be applied to the modulating signals to enhance the achievable loss reduction.

By manipulating the DC-offset and third order harmonics intelligently in the modulating signals, the total losses across the power switches can be reduced, leading to lower thermal stress across the power switches as a whole.

In order to make sure the thermal stresses are evenly distributed, the present disclosure can be implemented directly via the control strategy and optimization algorithm to determine the optimum DC injection and third order harmonics to be added to the modulating signals.

This algorithm estimates the junction temperature of each device based on the device's current I_{c}, voltage Vc, switching frequency F_{sw}, thermal impedance and case temperature Tc. The monitoring algorithm has been developed and a detailed description of this algorithm is provided in Annex A.

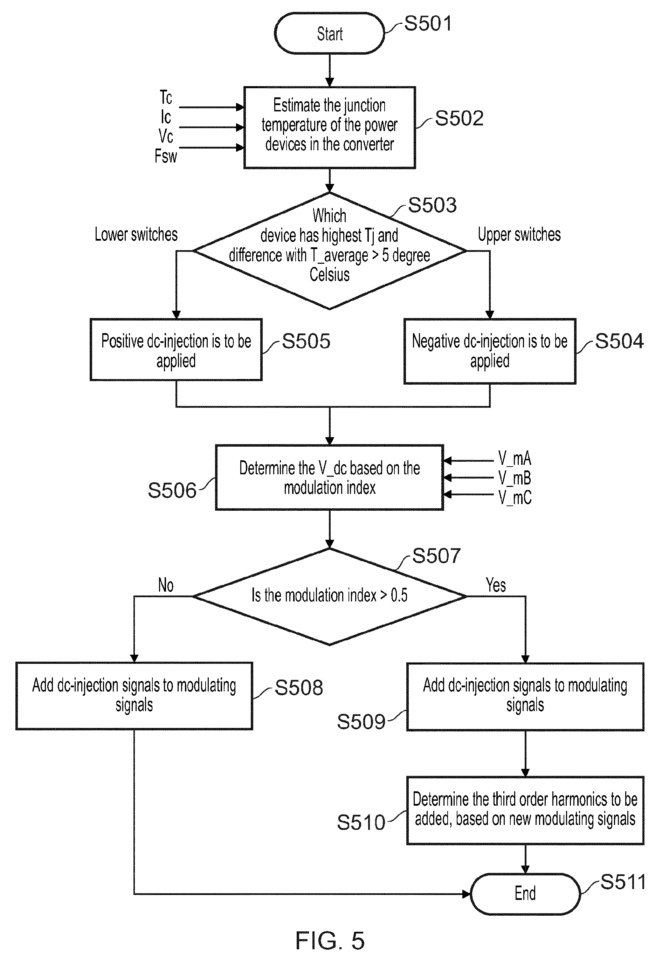

Figure 5 shows a flow chart embodying one or more aspects, and optional features, of the present disclosure. Figure 5 describes the methodology of an embodiment of the present disclosure used to control the junction temperatures of the power switches for a three-phase inverter as shown in Figure 1. It should go without saying that the present disclosure is not limited to a three phase inverter, the present disclosure is applicable to any polyphase phase power converter, for example, an inverter.

At step S501, the method starts.

At step S502 a value for the junction temperate Tc of each power switch is obtained.

The junction temperatures may be measured for example. However, conventionally, the junction temperature of a power switch is difficult (but not impossible) to measure.

Thus, the junction temperature for each power switch may be an estimated junction temperature (T_{j est}) based on measured values and/or known device characteristics for the respective power switch.

For example, in preferred embodiments, an algorithm is used to estimate the device junction temperature for each power device in real-time. For example, the algorithm preferably estimates the junction temperature of each power switch based on measured values for the current, voltage, switching frequency and/or case temperature, and preferably from known values for the switch such as thermal impedance. Data sheets for the respective switches will provide information about device characteristics such as thermal impedance. The skilled person knows how to measure the current, voltage, switching frequency and/or case temperature of a power switch.

Thus, for example, a value which may be an estimated value is obtained for the junction temperature of each power switch; for example, for each power switch in a respective phase leg of the inverter; for example, for each power switch in each respective phase leg of the inverter.

Specifics of the algorithm for estimating the junction temperature of the devices such as power switches will be discussed further below.

At step S503 a judgment is made as to which power switch has the highest junction temperature. Preferably, a judgement is made as to which power switch of all the power switches on all the phase legs has the highest junction temperature. For example, this judgment may be made on the basis of a comparison of the obtained values for the junction temperatures of the power switches.

The judgment may be made as to which power switch in each complementary pair of power switches on one (or more, or each) phase leg in the inverter has the highest temperature.

At step S503 it is also determined whether the power switch which is judged to have the highest junction temperature is an upper switch or a lower switch in the complementary pair of switches to which it belongs. The switches S1, S3 and S4 are considered upper switches, because each of S1, S3 and S4 is positioned in the upper arm of the phase leg. Conversely, each of S2, S4 and S6 are considered lower switches, because each of S2, S4 and S6 is positioned in the lower arm of the phase leg.

In short, when the junction temperature of a power switch is higher than others, the controller will determine whether the device is an upper or lower power switch. This is to determine whether positive or negative dc injection is required.

Thus, when it is determined that the power switch with the highest determined junction temperature is an upper power switch, the process proceeds to step S504. In step S504 a negative DC injection is applied to the modulating signal.

When it is determined that the power switch with the highest determined junction temperature is a lower power switch, the process proceeds to step S505. In step S505 a positive DC injection is applied to the modulating signal.

A DC injection can be defined as a DC bias or offset signal which biases or offsets the modulating signal relative to the balanced mid-point of the signal. In other words, a positive DC injection is a positive DC bias or offset signal, and a negative DC injection is a negative DC bias or offset signal.

Then, at step S506 an optimization algorithm is used to determine, for example, calculate the optimum values for the DC injection to be added to the modulating signals, based on the amplitudes of the modulating signals (*V_{mA}, V_{mB}* and *V_{mc}*).

At step S506 the optimization algorithm is also preferably used to determine, e.g. calculate, optimum values for third order harmonics to be added to the modulating signals, for example based on the amplitudes of the modulating signals (*V_{mA}, V_{mB}* and *V_{mc}*).

The optimization algorithm is configured to prevent the inverter operating in an overmodulation region and thus generating unwanted low order harmonics (such as 5th, 7th, 11th etc.) in the output waveforms.

At step S506 the magnitude of the dc-injection is determined on the basis of the modulation index. By knowing the magnitudes of the modulating signals (*V_{mA}, V_{mB}, V_{mc}*), the fundamental magnitude (V_{ref}) of the modulating signals can be determined, using a Park transformation. At the maximum modulation index (*m*=*1*), the maximum fundamental magnitude (*Vₘₐₓ*) is equal to V_{d}/sqrt(3). Therefore, the magnitude of the dc-injection (*V_{dc-inj}*) can be determined using equation *(1)* below: ${V}_{dc - inj} = {V}_{max} - {V}_{ref}$

Nevertheless, as the modulation index approaches unity, the effects of dc injection will be limited. Therefore, it is important to add appropriate third order harmonic signals to enhance the achievable losses reduction (step S509), while still at the linear modulation region. The third order harmonic that can be added to the modulating signals may be: ${V}_{3 rd} = 1 - {v}_{max}^{*} \left(t\right)$ if the lower switch is thermal stressed, or ${V}_{3 rd} = - 1 - {v}_{min}^{*} \left(t\right)$ if the upper switch is thermal stressed, where *v*ₘₐₓ(t)* = max (*v_{mA}*(*t*), *v_{mB}*(*t*), *v_{mC}*(*t*)) and *v*ₘᵢₙ*(*t*) = min(*v_{mA}*(t), *vmB*(*t*), *v_{mC}*(*t*)), and *v_{mA}*(t)*, v_{mB}*(t) and *v_{mC}*(t) are the instantaneous value of the modulating signals.

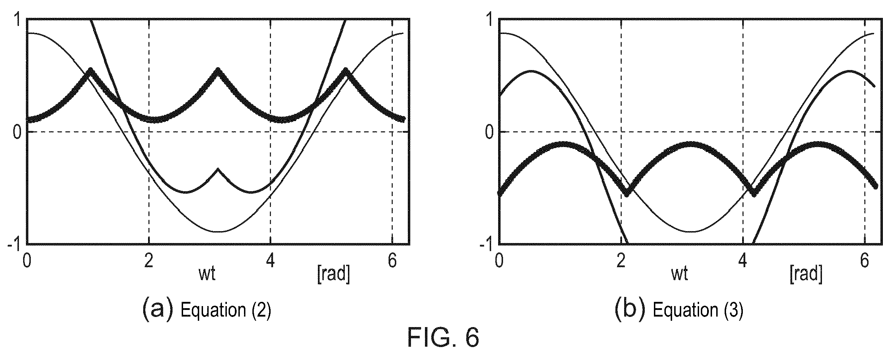

The effects of adding the third order harmonics into the modulating signals are shown in Figure 6. As shown in Figure 6, the shape of the modulating signals would be altered and the corresponding leg is tied to the positive or negative rail of the dc link without switching actions. This is able to reduce the average switching frequency by 33% and cause less switching losses. Also, the thermal stress of the devices can be reduced even the modulation index reach unity. For example, if the lower switch is thermally stressed, the third order harmonics (defined in equation *(2)* or equation *(3)*) can be added to the modulating signals to transfer the thermal stress to the upper switches.

As shown in the flow chart of Figure 5, after determining the maximum applicable magnitude of the dc-injection, the modulation index of the inverter is used to determine the level of dc-injection or third order harmonics to be applied to the modulating signals. The modulation index of the inverter can be determined using equation *(4).* At low modulation indices (0 - 0.5), at step S508, the dc-injection signal is ample to distribute the thermal stress among the switches. By adding the dc-injection to modulating signals, dc-link voltage can be fully utilized, even though at low modulation index. $m = \frac{\sqrt{3} {V}_{ref}}{{V}_{d}}$

On the other hand, at high modulation indexes (0.5 - 1), at step S509, a combination of dc-injection and third order harmonics is applied to the modulating signals, which the dc-injection is firstly added to the modulating signals. The addition of dc-injection signal should increase (or decrease) the modulating signals to maximum (or minimum) amplitude, depends on the switches that are under thermal-stressed. Then, based on the new modulating signals, the third order harmonics signals are derived using either equation *(2)* or *(3)*. These modulating signals will be applied to the converter for one fundamental cycle. After that, the junction temperature of the device is monitored to check on the effectiveness of adding the dc-injection and third order harmonics. The control algorithm have to always make sure that the converter is not operate in the over modulation region and generate unwanted low order harmonics in the output waveforms.

Thus, the switching patterns of the power switches can be modified, enabling even distribution of thermal stress across the power switches in the inverter.

At step S511, the method may stop. However, it is preferred that the method returns to S501, for example after a predetermined period of time.

The present disclosure is principally directed to the modulation techniques used in power converters (inverters) to control the operations of power switches, improving the reliability and extending the availability of the system by intelligently reducing the possibility of device failures due to thermal stress.

The solution provided by the present disclosure is applicable to both low and high power systems that employ power switches and implement high switching frequency operation. This includes motor drives, power converters, inverters and chopper drives, as examples.

The development of reliable and robust electrical systems is critical, especially for mission-critical and safety critical applications such as aircrafts and marine vessels. The present disclosure provides for improved reliability and availability of power electronics systems by reducing the possibility of device failure due to thermal stress.

Besides sinusoidal pulse-width modulation strategy, the present disclosure can be used for other modulation strategies, such as space vector modulation, discrete pulse-width modulation, discontinuous pulse-width modulation etc.

Also, the present disclosure can be further improved by combining with cooling system used in power inverter. If the cooling system is developed with active control capability, the control operation of the present disclosure can be aligned with the active control of the cooling system to effectively managing the operating temperature of the power switches.

In addition to a three-phase two-level inverter, the present disclosure can be applied to control the power switches of multilevel power converter system, which are mainly used in high voltage high power applications. For such systems, the present disclosure is able to distribute thermal stress of the power switches across the system evenly. In addition, due to the higher number of power switches required in multilevel power converter system, the benefits of reducing the thermal stress of failing switch in multilevel inverter is a significant improvement over the prior art.

### Annex A

### Method for Estimating the Junction Temperature in Electronic Devices

### A. Dynamic Thermal Model

The present disclosure provides a compact dynamic thermal model which is based on thermal resistance and thermal capacitance, and is used for carrying out the electro-thermal simulation.

Again, an IGBT will be used to explain this aspect of the disclosure.

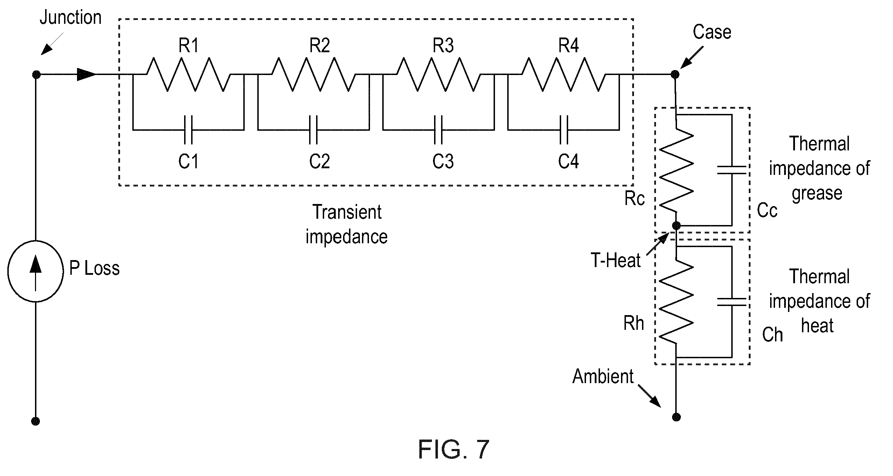

The IGBT can be modelled as a thermal impedance equivalent circuit as shown in Figure 7. Figure 7 shows a respective "cell" for each physical domain of an IGBT switch structure, consisting of both thermal resistance and capacitance.

Four parallel thermal resistances and capacitance sub-circuits are connected in series to represent the thermal model for an IGBT, and it has been seen that the four parameter model gives good representation of the Zₜₕ I-C curve.

The thermal impedance (Zₜₕ (T)) of the cell can be expressed by Equation 1: ${Z}_{th} \left(t\right) = {R}_{1} \left\{1-{e}^{\left(-t/{R}_{1}{C}_{1}\right)}\right\} + {R}_{2} \left\{1-{e}^{\left(-t/{R}_{2}{C}_{2}\right)}\right\} + …$ where:
the parameters R₁, R₂, R₃, R₄, C₁, C₂, C₃, and C₄, can be determined using datasheet parameters.

### Thermal Impedance Extraction

In the present disclosure, the term thermal impedance is defined as the combined effect of thermal resistance and thermal capacitance.

However, in real time operation, the thermal impedance changes with the operating conditions such as temperature, switching frequency and duty cycle. For example, thermal impedance varies with a change in pulse duration. Hence static values do not give sufficiently accurate results.

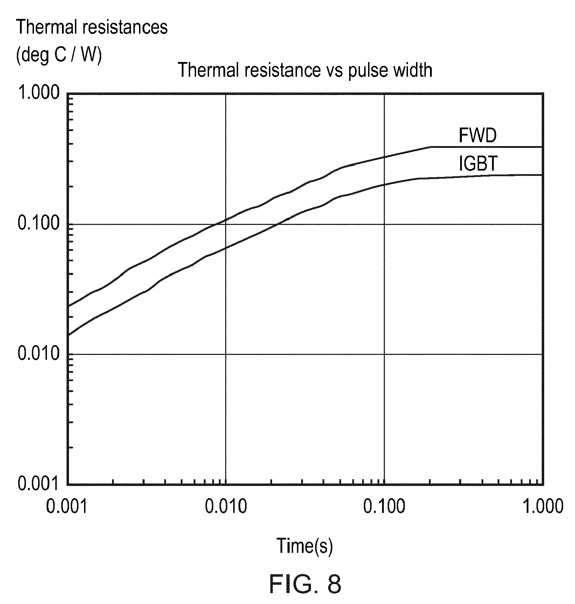

Figure 8 illustrates an example plot of junction to case thermal impedance variation with respect to changes in rectangular pulse duration for a typical switch; in this case a freewheeling diode.

In the context of three phase inverters, where switches are operated using PWM switching signals, the pulse width for each switching cycle is not constant. Therefore, thermal impedance varies during each switching cycle.

Hence the present disclosure proposes to use dynamic thermal impedance values which are derived by considering the operating conditions of the switch such as junction temperature, switching frequency and duty cycle.

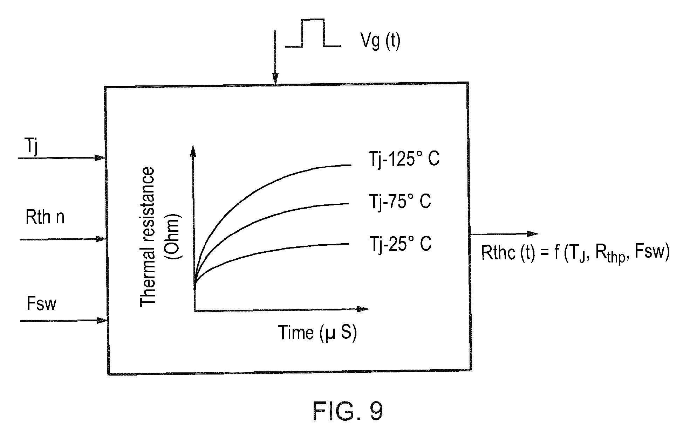

Figure 9 shows a representation of a look up table where thermal impedance values are precalculated and stored based on their variation with temperature and pulse duration. During operation of the power module, the dynamic thermal Impedance can be extracted based on the operating conditions and the thermal Impedance calculated as in the preceding section.

### B. Calculation of IGBT power loss

Now it will be described how to calculate accurately the power loss within the power device, again with reference to an IGBT as an example.

The power losses of switching devices, such as IGBTs, can be divided into conduction losses and switching losses (the so-called 'turn-on' and 'turn-off' losses). These losses heavily depend on the device technology and the modulation method.

The total power loss in the device has three components: the switching loss (P_{sw}) and the conduction loss in IGBT (P_{Qcon}), and loss in the diode (P_{D}) as given in Equation 2. ${P}_{T} = {P}_{QCON} + {P}_{D} + {P}_{SW}$

Then each component can be further expanded as given in Equation 3 below (see Z. Zhou, M. S. Khanniche, P. Igic, S, T. Kong, M. Towers, P. A. Mawby, "A Fast Power Loss Calculation Method for Long Real Time Thermal Simulation of IGBT modules for a Three-Phase Inverter System", EPE 2005). ${P}_{T} = \left({I}_{Q_ave}\times {V}_{ce_on}+{{I}_{Q_ave}}^{2}\times {R}_{Q}\right) + \left({I}_{D_ave}\times {V}_{D_on}+{{I}_{D_ave}}^{2}\times {R}_{D}\right) + \left(\frac{{E}_{max}}{2 π}\times {F}_{sw}\times sinθ\right)$ where:
I_{Q_ave} = average device current;
I_{D_ave} = average diode current;
V_{ce_on} = device turn on voltage;
R_{Q} = IGBT on resistance;
V_{D_on} = diode on voltage;
R_{D} = diode on resistance;
F_{sw} = switching frequency; and
Eₘₐₓ = maximum switching energy loss.

In order to calculate the power losses in the devices accurately, individual device currents and device 'turn-on' voltage must be determined.

Device currents are generally not measured in converter applications (for example, three phase inverters) because the device current waveform has a complex shape, and power loss calculation would be difficult if an exact measure of the time varying device current is required. Hence in this disclosure the device current is estimated from the phase current, which is usually measured for control purposes. Specifically, to calculate the power loss and to simplify the calculation, the device average current and the diode average current need to be calculated. These will be explained in the following section.

Moreover, the device 'turn-on' voltage is also estimated based on the operating conditions; this will also be explained in the following section.

### Extraction of device currents from phase currents

Voltage source inverters are controlled by controlling the device in time to achieve the required output voltage. The phase currents depend on the applied voltage and the load. If the load is resistive then the current and voltage have the same phase angle, otherwise they have a phase difference. Accordingly an IGBT or diode would carry the current. This needs to be considered when determining the device current from the phase current.

Moreover, the effective load voltages and currents are continuous quantities and they cannot be directly used for calculating the power losses.

By using the PWM reconstruction technique, device currents and the diode currents are mathematically reconstructed as given in Equations 4 and 5.

The present disclosure uses the reconstructed current for calculating the power loss in the switching device and the diode. $\left[\begin{matrix}{I}_{T 1} \\ {I}_{T 2} \\ {I}_{T 3} \\ {I}_{T 4} \\ {I}_{T 5} \\ {I}_{T 6}\end{matrix}\right] = \left[\begin{matrix}\left(1+sign\right) {S}_{1} & 0 & 0 \\ 0 & {\left(1+sign\right) S}_{2} & 0 \\ 0 & 0 & {\left(1+sign\right) S}_{3} \\ {\left(1-sign\right) S}_{4} & 0 & 0 \\ 0 & {\left(1-sign\right) S}_{5} & 0 \\ 0 & 0 & {\left(1-sign\right) S}_{6}\end{matrix}\right] * \left[\begin{matrix}{I}_{R} \\ {I}_{Y} \\ {I}_{B}\end{matrix}\right]$ $\left[\begin{matrix}{I}_{d 1} \\ {I}_{d 2} \\ {I}_{d 3} \\ {I}_{d 4} \\ {I}_{d 5} \\ {I}_{d 6}\end{matrix}\right] = \left[\begin{matrix}{\left(1-sign\right) S}_{1} & 0 & 0 \\ 0 & {\left(1-sign\right) S}_{2} & 0 \\ 0 & 0 & {\left(1-sign\right) S}_{3} \\ {\left(1+sign\right) S}_{4} & 0 & 0 \\ 0 & {\left(1+sign\right) S}_{5} & 0 \\ 0 & 0 & {\left(1+sign\right) S}_{6}\end{matrix}\right] * \left[\begin{matrix}{I}_{R} \\ {I}_{Y} \\ {I}_{B}\end{matrix}\right]$ where:
T₁...T₆ represents the IGBTs,
d₁....d₆ represents the freewheeling diodes; and
S₁...S₆ represents the switching states of the IGBTs.

The 'sign' can be either +1 or -1, depending on the direction of load current I_{R}, I_{Y}, I_{B}, which represent the three phase load currents.

### Derivation of Average Device current

The device currents are extracted from the phase current which is in discrete continuous mode.

Hence in order to calculate the average device current, the phase angle and the duty cycle of phase current need to be considered. In the following calculations, it is assumed that phase currents have no ripple component and are perfectly sinusoidal. But the calculations are simpler if the phase current is considered as the time reference. Thus the average device current defined as given in Equation 6 (see Masayasu Ishiko and Tsuguo Kondo, "A Simple Approach for Dynamic Junction Temperature Estimation of IGBTs on PWM Operating Conditions", IEEE 2007): ${I}_{avg} = {I}_{Tϕ} sin ωt$ where:
*ω* = angular frequency of phase current; and
φ=1, 2, 3... switch number.

Then the duty cycle for a sinusoidal waveform can be defined as given in Equation 7: $d = \frac{1}{2} \left[1+M sin\left(θ+ωt\right)\right]$ where:
*θ* = phase angle of the fundamental frequency component of phase current; and
M = modulation index.

The effective duty cycle of one phase of PWM varies according to Equation 8; $d \left(t\right) = \frac{1}{2} \left[1+M.sin\left({\int }_{- ∞}^{t} ω . ⅆ t\right)\right]$ where:
M = modulation index;
ω = angular frequency; and
t = time.

Under constant frequency conditions the duty cycle can be simplified in terms of the phase angle *θ*, as set out in Equation 9: $d \left(t\right) = \frac{1}{2} \left[1+M.sin\left(θ\right)\right]$

In the case of space vector modulation, the effective duty cycles of the devices can be determined as given in Equation 10: ${d}_{T 1} = \frac{1}{2} + \frac{M}{\sqrt{3}} \cdot sin \left(θ+ϕ\right) + \frac{M}{6 \sqrt{3}} \cdot sin \left(3θ+3ϕ\right)$

Consider the device one; the duty cycle of the freewheeling diode is equal to the duty cycle of the top IGBT as in Equation 11. In other words, the 'ON' time of the top IGBT is equal to the 'ON' time of the bottom freewheeling diode. The duty cycle of the lower devices (both IGBT and freewheeling diode) equals to one minus the top device's duty cycle as in Equation 12. ${d}_{T 1} \left(θ\right) = {d}_{d 1} \left(θ\right)$ ${d}_{T 2} \left(θ\right) = {d}_{d 2} \left(θ\right) = 1 - {d}_{T 1} \left(θ\right)$

The average device currents are determined by the device switching currents multiplied by the duty cycle of the particular device as given in Equations 13 to 16. ${I}_{C 1 avg} \left(θ\right) = {I}_{T 1 ϕ} \cdot {d}_{T 1} \left(θ\right)$ ${I}_{C 1 avg} \left(θ\right) = - \left({I}_{T 1 ϕ}\cdot {d}_{T 1}\left(θ\right)\right)$ ${I}_{D 1 avg} \left(θ\right) = {I}_{d 1 ϕ} \cdot {d}_{d 1} \left(θ\right)$ ${I}_{D 1 avg} \left(θ\right) = - \left({I}_{d 1 ϕ}\cdot {d}_{d 1}\left(θ\right)\right)$

The average current of the device over the sine wave can be found by integrating the device current from 0 to π and then dividing by 2 π. For example, the average current for the top IGBT can be determined by Equation 17: ${I}_{Q_ave} = {I}_{C 1 avg} = \frac{1}{2 π} {\int }_{0}^{π} {I}_{T 1} \cdot {d}_{T 1} \left(θ\right) \cdot ⅆ \left(θ\right)$

### Conduction Loss Calculations

Conduction loss has two components, a first introduced due to 'ON' stage voltage and a second due to 'ON' state resistance. The power dissipated in a device with a constant voltage drop can be calculated by multiplying average current times with voltage drop (on state voltage estimation will be discussed later). The power dissipated in a resistive element is the square of the device average current times the resistance. Therefore the total power dissipated in the power module due to conduction loss is calculated as shown in Equation 18: ${P}_{Q \left(Con\right)} = {I}_{Q_ave} {V}_{ce_on} + {{I}_{Q_ave}}^{2} {R}_{Q}$

### Diode turn on loss

The diode loss is small but not negligible especially at higher junction temperatures. It can be calculated as given below in Equation 19 (see, for example, Z. Zhou, M. S. Khanniche, P. Igic, S, T. Kong, M. Towers, P. A. Mawby, "A Fast Power Loss Calculation Method for Long Real Time Thermal Simulation of IGBT modules for a Three-Phase Inverter System", EPE 2005). ${P}_{D} = {I}_{D_ave} {V}_{D_on} + {{I}_{D_ave}}^{2} {R}_{D}$

### Switching loss calculations

Power dissipated due to switching over one PWM cycle (*P_{CYC}*) is calculated by dividing the total energy by the carrier period (*T_{c}*). This power dissipation can also be expressed as the carrier PWM frequency times the total switching energy as in Equation 21. ${P}_{CYC} = \frac{{E}_{tot} \left(i\right)}{{T}_{C}}$ ${P}_{CYC} = {F}_{C} . {E}_{tot} \left(i\right)$

The average switching loss (*P_{sw}*) is found by summing the power loss of each cycle and dividing by the number of samples. If the carrier frequency (*F_{c}*) is an integer multiple of the sine frequency the average power may be determined by using the following summation: ${P}_{SW} = \frac{1}{M} {\sum }_{N = 1}^{M} {P}_{CYC}$ ${P}_{SW} = \frac{1}{M} {\sum }_{N = 1}^{M} {F}_{C} . {E}_{tot} \left(i\right)$ where:
M = modulation index.

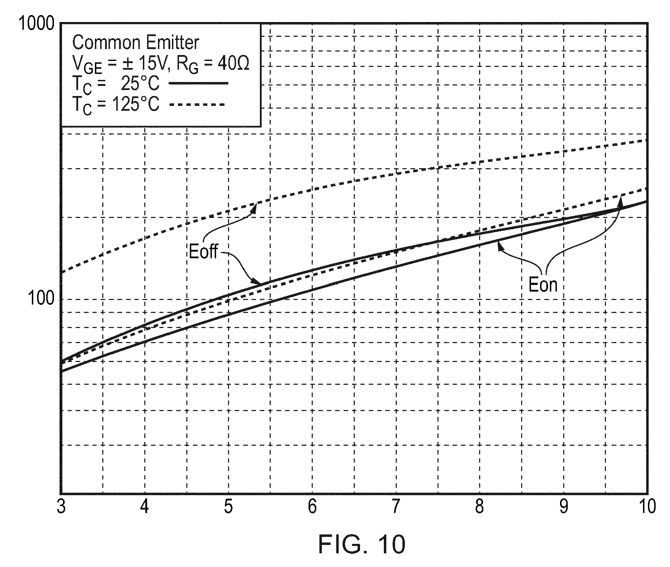

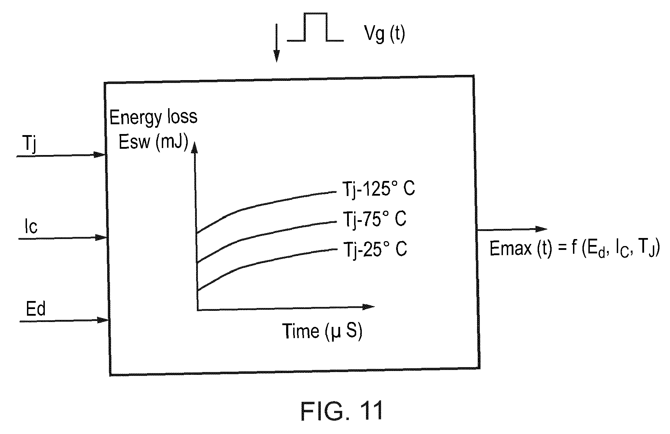

Using the linearized model shown in Figure 11, the switching loss extracted by referring to manufacturers switching loss versus current curve (see Figure 10), the switching energy may be expressed as: $E max = \frac{{E}_{d} \cdot {I}_{C} \cdot {T}_{JM}}{{I}_{CN} \cdot {T}_{JMN}}$ where:
E_{d}= Switching energy loss (µj) at previous cycle;
I_{c}= Device current (A);
I_{CN}=Nominal device current (A);
T_{JM}= Junction temperature (°C); and
T_{JMN}=Nominal Junction temperature (°C).

Assuming that the gate resistance is constant the switching energy loss may be expressed as; ${E}_{SW} = \frac{{E}_{d} \cdot {I}_{D} \cdot {T}_{JM}}{{I}_{DN} \cdot {T}_{JMN}} \cdot sin θ$

The average power loss (*P_{sw}*) due to switching over one cycle is equal to the switching energy (*Eₘₐₓ*) of the device divided by the PWM period (or times the switching frequency (*F_{c}*)) as given in Equation 27. The average switching losses on the total sine wave function equal to the integral of *P_{sw}* over the period and then divided by *2π* as given in Equation 28.

Thus the switching losses are directly proportional to the switching frequency and switching energy as given in Equation 28.

The derived switching energy losses are stored in the table and by inputting junction temperature, previous cycle switching energy and the device current the required maximum switching energy can be obtained and will be used for total power loss calculation. ${P}_{SW} = \frac{1}{2 π} {\int }_{0}^{π} P . ⅆ \left(θ\right)$ ${P}_{SW} = \frac{1}{2 π} {\int }_{0}^{π} {F}_{C} . {E}_{max} sin θ . ⅆ \left(θ\right)$ ${P}_{SW} = \frac{{F}_{C} . {E}_{max}}{2 π} {\int }_{0}^{π} sin θ . ⅆ \left(θ\right)$

### Extraction of Device voltage

Switching devices which operate at high frequency would have a typical 'ON' state voltage between, say, 1.8V and 3.2 V. However, if one needs to measure this voltage it is necessary to have high bandwidth sensor, and the associated processor should have a suitable bandwidth to capture the measurement, which is burdensome. Moreover this is not a typical measurement that is available in common converter drives. Hence, V_{ce_on} is estimated here.

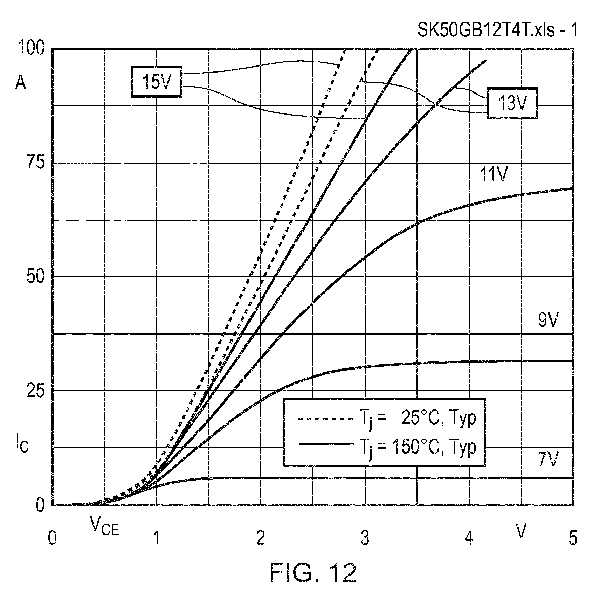

However the 'ON' state voltage varies with the current and also device junction temperature. An example of a typical device characteristic is shown in Figure 12. The use of static values would introduce errors in power loss calculation, assuming both constant gate voltage and gate resistance. From the Figure 12 the on-state voltage can be expressed as given in Equation 29. ${V}_{ce_on} = \left(a+b\cdot {I}_{C}\right) \cdot \frac{{T}_{JM}}{{T}_{JMN}}$

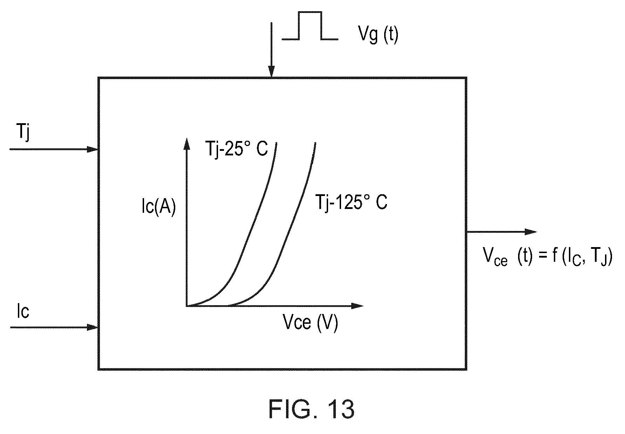

Then the calculated values are stored in the form of a characteristic curve, and then 'ON' stage voltage can be estimated in real time considering the device operating conditions as shown in Figure 13.

### Junction Temperature

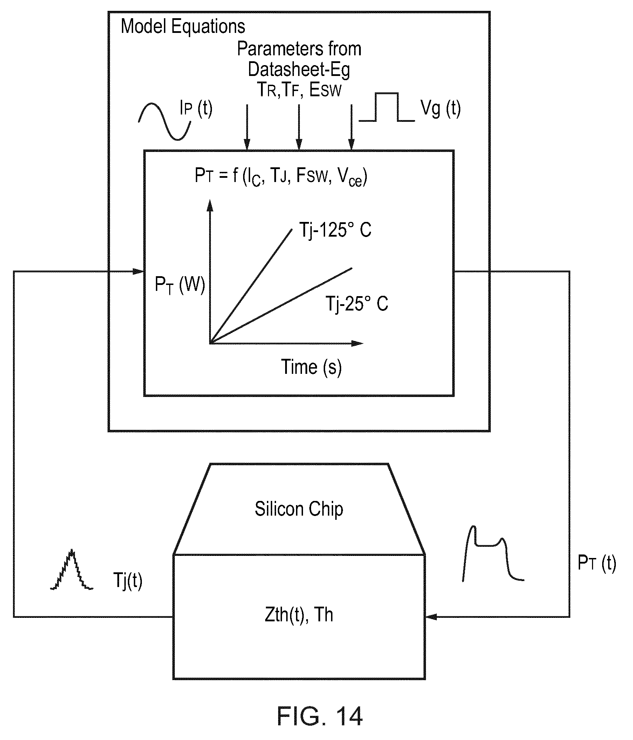

During the each switching time the change in junction temperature can be obtained from the multiplication of thermal impedance (rs*Z_{TH}*) under pulse operation (as given in equation (2)) with the maximum power dissipation *P_{T}.* The junction temperature variation during the switching period can then be calculated as given in Equation 30 and then by adding that with the case temperature of the device the actual junction temperature can be estimated. The calculation process is shown in Figure 14. ${Δ T}_{j} = {P}_{T} \times {Z}_{TH}$ ${T}_{J} = \left({P}_{T}\times {Z}_{TH}\right) + {T}_{C}$

### Experimental Validation & Analysis

To validate the developed dynamic electro-thermal model and junction temperature estimation method a test rig was developed.

The junction temperature is measured by using a calibrated thermocouple. The casing of the device is removed, and the thermocouple is installed near to the IGBT junction (being the hottest place in the device, where the losses occur).

The thermocouple is calibrated using a thermal camera to measure the actual junction temperature..

Three examples are presented as evidence to validate the performance and accuracy of the developed junction temperature estimation method.

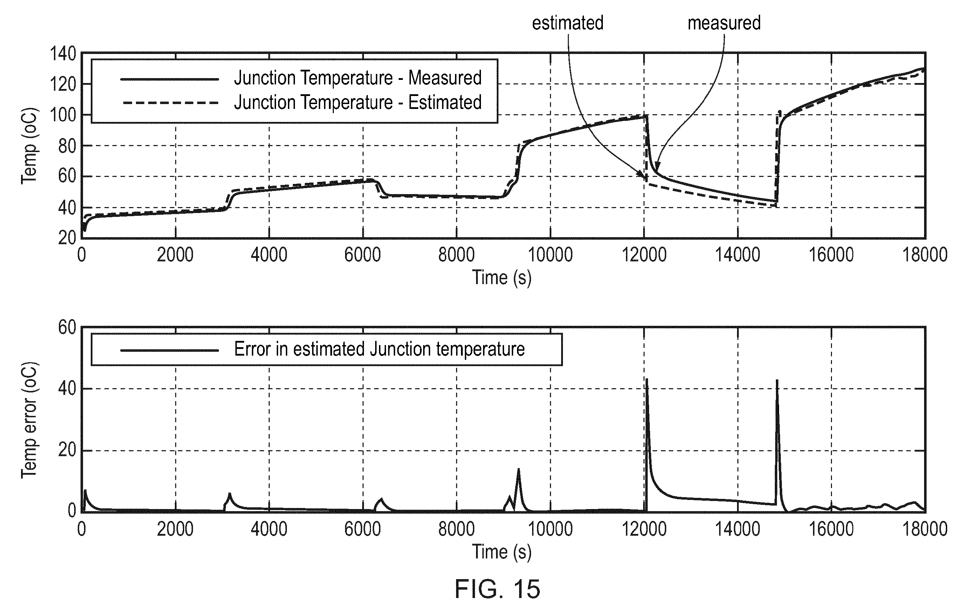

Firstly the models are validated using a simple chopper circuit, where the pulsed width is constant during the steady operation. The switching frequency was kept at 5 kHz during this operation. The IGBT modules in the test rig were loaded with different collector currents 10A, 15A, 25A in step manner. The measured junction temperature and the online estimated junction temperature acquired by using the present disclosure are plotted in Figure 15. The results show excellent accuracy in junction temperature under this dynamic loading condition.

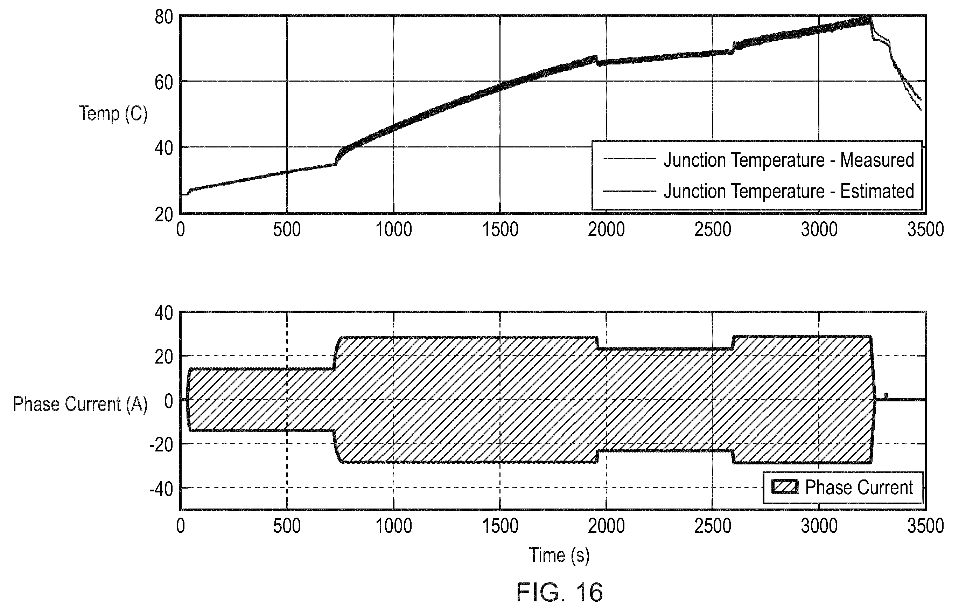

Secondly, the electro thermal model for the three phase inverter was developed. Figure 16 shows the experimental and measurement results of junction temperature. These power modules with inverter test set up are tested with different load profiles. Figure 16 shows the temperature variation for a dynamic load current of 20A to 40A and switching frequency of 5 kHz. It is evident from this figure that the estimated temperature for the steady state load profile follows the measured temperature. The error between estimated and measured temperature is less than 3%.

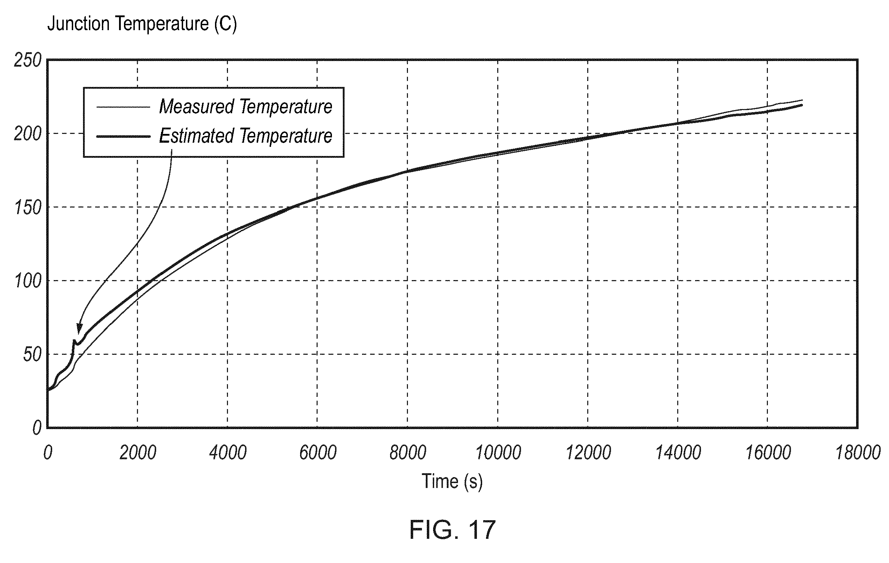

Thirdly, to verify the accuracy of the developed electro-thermal model in transient conditions, a single IGBT chopper circuit was constructed with the circuit being energized with a constant power rating of 5kW. The corresponding results were logged with the help of a data acquisition system. Plotted results are shown in Figure 17. It can be seen that the model shows good accuracy in temperature estimation until the device failure point. The initial error at low temperature is within ±7.2 % and then decreases to approximately 3% as compared with measured temperature. But, of course, the accuracy of the proposed method depends upon the accuracy of the measuring devices.

From these results it is evident that junction temperature estimation shows good accuracy during various loading and operating conditions as compared with equivalent measured results.

### Further Comments

The present disclosure proposes an electro-thermal model to estimate the junction temperature of power electronics switching device online (in real time), which is particularly useful for IGBTs used in power converters (inverters).

The proposed disclosure uses only phase current measurements (that are generally used for converter control anyway, and are therefore typically available for use) for calculating the power loss. The only possible additional measurement that may be needed, and which may be a nonstandard measurement in most system, is the heat sink temperature (i.e. the case temperature of the relevant device).

The device currents can be reconstructed considering the modulation signals and phase currents.

This has enabled online (real time) determination of the status (which is conducting at given time) of the IGBT and diode and the actual current across the device and diode.

Then average device current and diode currents are calculated to support power loss calculation.

Considering the operating condition such as junction temperature, device current, switching frequency, device turn on voltage, and thermal impedance values are used for junction temperature estimation. This improves the accuracy of the junction temperature estimation against parameter variation.

Also this eliminates the need for additional sensors/measurements such as the need for turn-on voltage measurements and device current measurements, which are required by some prior art proposals.

## Claims

1. A method of controlling an inverter, the inverter including a single-phase inverter arrangement comprising a complementary pair of power switches,
the method including the steps of:
controlling the complementary pair of power switches with a modulating signal to output an AC signal;
judging which of the power switches in the complementary pair of power switches is at a higher temperature;
determining the magnitude and sign of a DC offset signal to apply to the modulating signal to reduce the total current in the power switch judged to be at the higher temperature; and
applying the DC offset signal to the modulating signal.

2. The method of controlling an inverter according to Claim 1, including the step of obtaining a respective temperature value for each power switch in the complementary pair of power switches; wherein the step of judging which of the power switches in the complementary pair of power switches is at a higher temperature is based on the obtained temperature values.

3. The method of controlling an inverter according to Claim 1 or Claim 2 wherein the obtained temperature values are estimated temperature values.

4. The method of controlling an inverter according to Claim 3 wherein the step of obtaining the temperature values includes the step of estimating the temperature values.

5. The method of controlling an inverter according to any one of Claims 2 to 4 wherein each temperature value indicates the junction temperature of a respective power switch.

6. The method of controlling an inverter according to any one of Claims 1 to 5, wherein the step of determining the magnitude and sign of a DC offset signal to apply to the modulating signal to reduce the total current in the power switch judged to be at the higher temperature, comprises the steps of:
if the power switch having the highest temperature is positioned in an upper arm of the phase leg, then a negative DC offset signal is applied; or
if the power switch having the highest temperature is positioned in a lower arm of the phase leg, then a positive DC offset signal is applied; and
determining the magnitude of the DC offset signal to apply to the modulating signal to reduce the total current in the power switch judged to be at the higher temperature.

7. The method of controlling an inverter according to Claim 6, wherein the step of determining the magnitude of the DC offset signal to apply to the modulating signal to reduce the total current in the power switch judged to be at the higher temperature, comprises the steps of:
determining a modulation index, m, using the equation $m = \frac{\sqrt{3} {V}_{ref}}{{V}_{d}} ,$ where V_{ref} is the fundamental magnitude of the modulating signal, and V_{d} is the DC supply voltage; and
either:
if the modulation index is greater than 0.5, determining the magnitude of the DC offset signal to apply to the modulating signal to reduce the total current in the power switch judged to be at the higher temperature;
or:
if the modulation index is less than 0.5, determining the magnitude of the DC offset signal to apply to the modulating signal to reduce the total current in the power switch judged to be at the higher temperature, and
determining the magnitude of a third order harmonic to be added to the modulating signal.

8. The method of controlling an inverter according to Claim 7, wherein the step of determining the magnitude of a third order harmonic to be added to the modulating signal, comprises the step of:
if the power switch having the highest temperature is positioned in an upper arm of the phase leg, then determining a third order harmonic as ${V}_{3 rd} = - 1 - {v}_{min}^{*} \left(t\right) ;$ or
if the power switch having the highest temperature is positioned in a lower arm of the phase leg, then determining a third order harmonic as ${V}_{3 rd} = 1 - {v}_{max}^{*} \left(t\right) ;$
where *v*ₘₐₓ*(*t*) = max(*v_{mA}*(*t*),*v_{mB}*(*t*),*v_{mC}*(*t*)) and *v*ₘᵢₙ*(*t*) = min(*v_{mA}*(*t*),*v_{mB}*(*t*),*v_{mC}*(*t*)). *v_{mA}*(*t*), *v_{mB}*(*t*) and *v_{mC}*(*t*) are the instantaneous value of the modulating signals.
